# EUROPEAN PATENT SPECIFICATION

(11) **EP 2 077 085 B1**
(45) Date of publication and mention of the grant of the patent: **16.10.2013**
(21) Application number: 08171449.5
(22) Date of filing: 12.12.2008
(51) Int. Cl.: A47J 27/21

(54) **Improvements in and relating to water heating apparatus**
Verbesserungen für und in Zusammenhang mit einer Wassererhitzungsvorrichtung
Améliorations concernant un appareil de chauffage de l'eau

(30) Priority: 04.01.2008 GB 0800128
(43) Date of publication of application: 08.07.2009
(73) Proprietor: Spectrum Brands (UK) Limited, Manchester, M35 0HS (GB)
(72) Inventor: Saba, Simon, Manchester, Lancashire M35 0HS (GB)
(74) Representative: Brandon, Paul Laurence

(56) References cited:
- WO-A-97/33507
- WO-A1-2009/081156
- DE-U1- 20 002 687
- GB-A- 2 369 553
- GB-A- 2 375 284

## Description

### Field of the Invention

The present invention relates to water heating apparatus.

### Background to the Invention

A kettle is a water heating apparatus comprising a water heater and a water tank in fluid communication with a pouring spout. By "pouring spout" we mean a spout through which water can be poured out of the kettle by a pouring action, involving tipping the kettle from the horizontal to bring the level of the spot to the level of the water.

A water dispenser is a water heating apparatus comprising a water heater and a water tank in fluid communication with a dispensing spout. By "dispensing spout" we mean a spout through which water can be pumped, thereby not requiring the apparatus to be tipped to deliver water.

GB-A-2 375 284 discloses an electric kettle comprising a vessel provided with a pump for delivering water through an outlet and into a cup positioned alongside the vessel. The outlet is above an inset portion of the vessel and is itself beneath a conventional spout. An on/off switch for the electrical heating element of the vessel and a pushbutton for the pump may be mounted at the top of a handle. A compartment at the bottom of the vessel may house the pump and a control circuit therefor. The kettle may be cordless, standing on a base which also supports the cup.

The document WO 2009/081156 is comprised in the state of the art according to Article 54(3) EPC and discloses a liquid heating apparatus.

Preferred embodiments of the present invention aim to provide an improved water heating apparatus.

### Summary of the Invention

According to the present invention in a first aspect, there is provided a water heating apparatus comprising a kettle and a water dispenser in which the apparatus comprises a first water heater for the kettle and characterised in that the apparatus further comprises a second water heater for the water dispenser.

Suitably, the water heating apparatus comprises a common water tank for both the kettle and the water dispenser.

Suitably, the water heating apparatus comprises a body in which there is provided a receptacle locator. The receptacle locator may comprise a shaped cut-out section. The shaped cut out section may be concave.

Suitably, the water dispenser comprises a pump configured to pump water from a water tank to a dispensing spout. Suitably, the water dispenser comprises a tube through which the water can be pumped from the water tank to the dispensing spout. Suitably, the tube terminates in the dispensing spout and the, in use, downward part of the pump spout is less than 5cm³ in volume. Suitably, the water dispenser comprises a water heater configured to heat the water while the water is in the water tube.

Suitably, the water dispenser is configured to heat the dispensed water to at least 90°Celsius.

Suitably, the apparatus comprises a power base connectable to a power source and a main body in which the water tank is located, and the main body is connectable to the power base to receive power therefrom, in use.

The water dispenser comprises a dispensing spout and the kettle comprises a pouring spout, wherein the pouring spout is located above the dispensing spout. The pouring spout is located over the dispensing spout.

### Brief Description of the Drawings

For a better understanding of the invention, and to show how embodiments of the same may be carried into effect, reference will now be made, by way of example, to the accompanying diagrammatic drawings in which:
Figure 1 is an isometric view from in front and to one side of a water heating apparatus according to the present invention.
Figure 2 is a view similar to Figure 1, but with a cup also shown.
Figure 3 is an isometric view from above and to one side of the apparatus shown in Figures 1 and 2 with the lid open.
Figure 4 is an isometric view of the apparatus of Figures 1-3 showing the internal arrangement of components.

### Description of the Preferred Embodiments

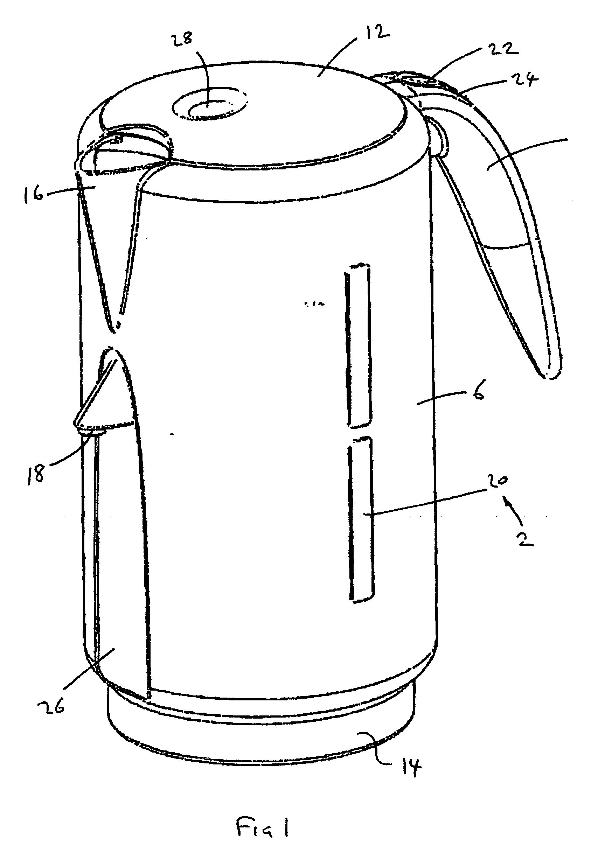

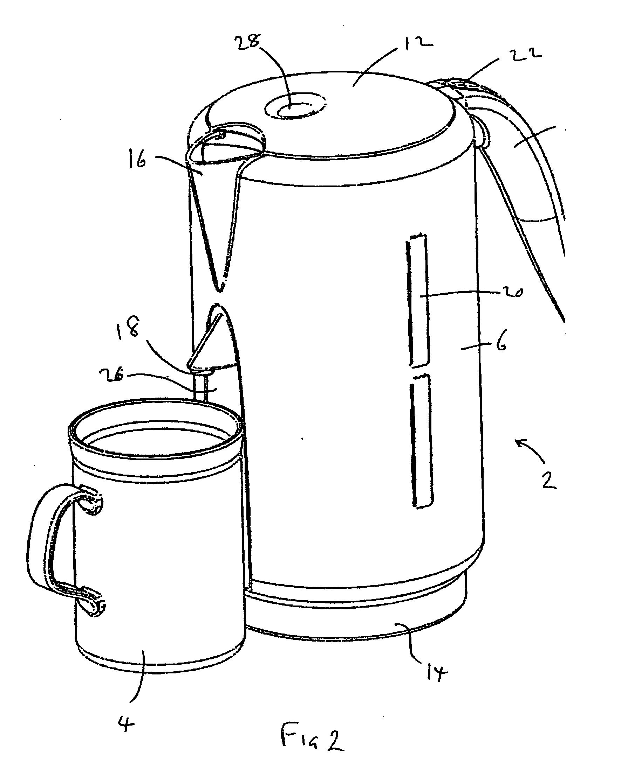

Referring to Figures 1-3 of the accompanying drawings, there is shown a water heating apparatus 2 according to the present invention, with a water receptacle in the nature of a cup 4.

The apparatus 2 comprises a main body 6 forming a water tank 8. The apparatus 2 further comprises a handle 10, a lid 12, a powerbase 14, a pouring spout 16, a dispensing spout 18 and a level indicator 20. The handle incorporates a kettle switch 22 and a dispenser actuator switch 24.

Main body 6 includes a concave cut-out section 26 shaped to receive a receptacle, in this case cup 4, beneath the dispensing spout 18 and to conveniently locate the cup 4 in position.

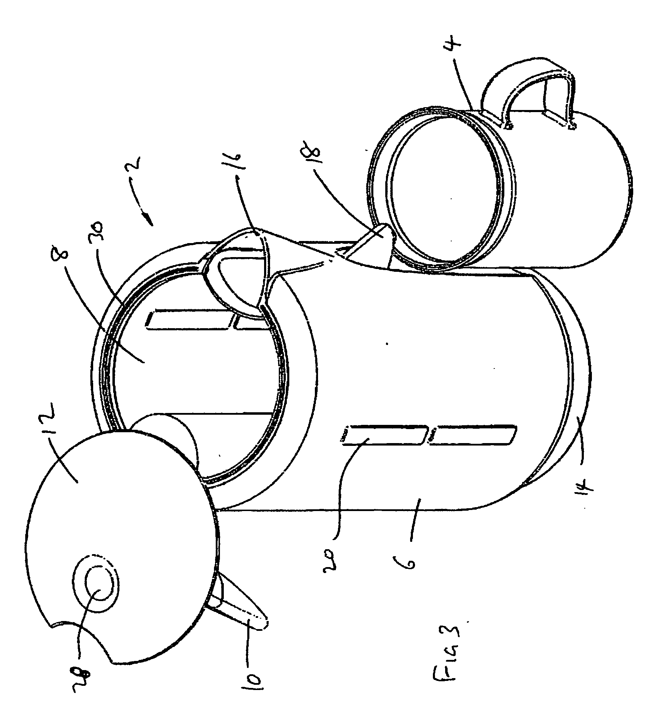

The lid 12 comprises a finger locator 28 in the form of a concave dip in the lid 12. The lid 12 is rotatably mounted on the main body 6 whereby it opens to the position shown in Figure 3.

The upper part of the main body 6 incorporates a plastics seal 30 which wipes the underside of the lid 12 as it is opened to remove condensation therefrom.

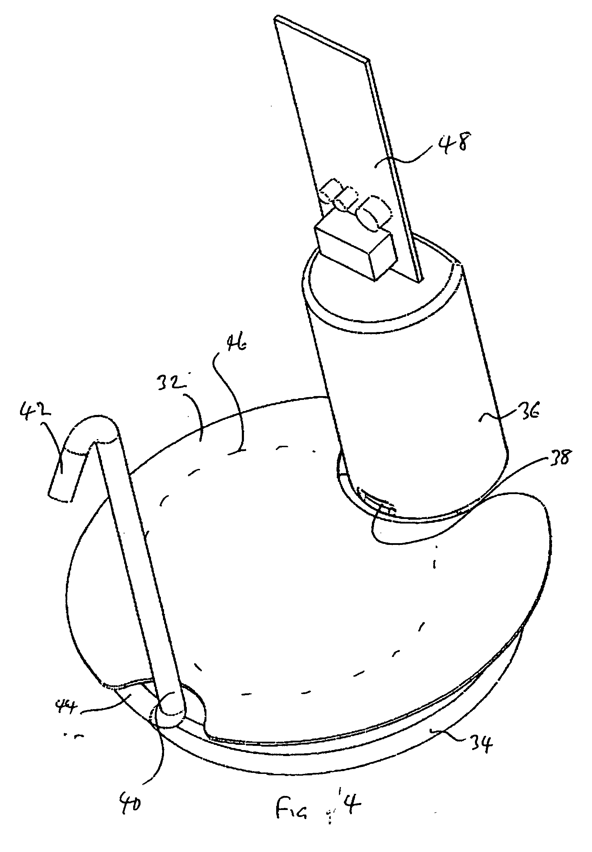

Figure 4 of the accompanying drawings shows internal components of the apparatus 2.

Inside the main body 6 is a floor 32 to the water tank 8. Under the floor 32 is a water tube 34 leading to an electric water pump 36. A water inlet 38 for the tube 34 penetrates the floor 32. Additional water tube 40 leads from the pump 36 to the dispensing spout 42. A dispenser water heater 44 is provided in contact with the additional tube 40 to heat the water in the additional tube 40. Also underneath the floor 32 is a flat heating element 46 of the type well known in the art to act as a kettle heating element.

Pump 36 has an associated printed circuit board control board 48 for controlling the apparatus 2.

The apparatus 2 comprises both a kettle and a water dispenser in a single unit.

The apparatus 2 has a main body 6 locatable on and connectable to the powerbase 14. The main body can be removed from the powerbase 14 as is well known in the art.

When to be used as a kettle, the apparatus 2 is controlled by kettle switch 22 to turn the kettle water heating element 46 on or off as desired. When water is at the desired temperature in the water tank 8, the main body 6 can be lifted from the powerbase 14 and by tilting the apparatus 2, water can be poured from the pouring spout 16.

When to be used as a water dispenser, a cup 4 is moved into position beneath the dispensing spout 18; the cup 4 is located in the concave cut-out section 26. The dispenser actuator switch 24 is then pressed to activate the pump 36 to pump water from the water tank 8 through the tubes 34, 40 out of the dispensing spout 18. The dispenser water heater 44 is also actuated to heat the water passing through the additional tube 40 so that hot water is dispensed through the dispensing spout 18.

It is noted that the water dispenser will not operate unless the main body 6 is on the powerbase 14 because it needs power to do so.

Various modifications can be made within the scope of the present invention for instance, a drip tray (not shown) can be provided beneath the dispensing spout to catch any drips therefrom. The drip tray can also act as a stand for a cup or similar receptacle.

## Claims

1. A water heating apparatus (2) comprising a kettle and a water dispenser in which the apparatus comprises a first water heater (46) for the kettle, wherein the apparatus further comprises a second water heater (44) for the water dispenser;
in which the water dispenser comprises a dispensing spout (18) and the kettle comprises a pouring spout (16), wherein the pouring spout (16) is located above the dispensing spout (18); and
in which the pouring spout (16) is located over the dispensing spout (18).

2. A water heating apparatus (2) according to claim 1 wherein the water heating apparatus (2) comprises a common water tank (8) for both the kettle and the water dispenser.

3. A water heating apparatus (2) according to claim 1 or claim 2 comprising a body (6) in which there is provided a receptacle locator (26).

4. A water heating apparatus (2) according to claim 3 wherein the receptacle locator (26) comprises a shaped cut-out section which is concave.

5. A water heating apparatus (2) according to any preceding claim in which the water dispenser comprises a pump (36) configured to pump water from a water tank (8) to a dispensing spout (42); and the water dispenser comprises a tube (40) through which the water can be pumped from the water tank (8) to the dispensing spout (42).

6. A water heating apparatus (2) according to claim 5, in which the tube (40) terminates in the dispensing spout (42) and the, in use, downward part of the pump spout is less than 5cm³ in volume.

7. A water heating apparatus (2) according to claim 5 or 6, in which the water dispenser comprises a water heater (44) configured to heat the water while the water is in the water tube (40).

8. A water heating apparatus (2) according to any preceding claim, in which the water dispenser is configured to heat the dispensed water to at least 90°Celsius.

9. A water heating apparatus (2) according to any preceding claim, in which the apparatus comprises a power base (14) connectable to a power source and a main body (6) in which the water tank (8) is located, and the main body (6) is connectable to the power base (14) to receive power therefrom, in use.

## Patentansprüche

1. Wassererhitzungsvorrichtung (2) mit einem Kessel und einer Wasserausgabevorrichtung, wobei die Vorrichtung einen ersten Wassererhitzer (46) für den Kessel umfasst, wobei die Vorrichtung ferner einen zweiten Wassererhitzer (44) für die Wasserausgabevorrichtung umfasst;
wobei die Wasserausgabevorrichtung einen Ausgabeausgießer (18) umfasst und der Kessel einen Schüttausgießer (16) umfasst, wobei der Schüttausgießer (16) oberhalb des Ausgabeausgießers (18) angeordnet ist; und
wobei der Schüttausgießer (16) über dem Ausgabeausgießer (18) angeordnet ist.

2. Wassererhitzungsvorrichtung (2) nach Anspruch 1, wobei die Wassererhitzungsvorrichtung (2) einen gemeinsamen Wassertank (8) für sowohl den Kessel als auch die Wasserausgabevorrichtung umfasst.

3. Wassererhitzungsvorrichtung (2) nach Anspruch 1 oder 2, mit einem Körper (6), in dem eine Behältnislokalisiervorrichtung (26) vorgesehen ist.

4. Wassererhitzungsvorrichtung (2) nach Anspruch 3, wobei die Behältnislokalisiervorrichtung (26) einen geformten ausgenommenen Abschnitt umfasst, der konkav ist.

5. Wassererhitzungsvorrichtung (2) nach einem der vorhergehenden Ansprüche, wobei die Wasserausgabevorrichtung eine Pumpe (36) umfasst, die so konfiguriert ist, dass sie Wasser von einem Wassertank (8) zu einem Ausgabeausgießer (42) pumpt, und die Wasserausgabevorrichtung ein Rohr (40) umfasst, durch das das Wasser vom Wassertank (8) zum Ausgabeausgießer (42) gepumpt werden kann.

6. Wassererhitzungsvorrichtung (2) nach Anspruch 5, wobei das Rohr (40) im Ausgabeausgießer (42) endet und der im Gebrauch nach unten gehende Teil des Pumpenausgießers ein Volumen von weniger als 5 cm³ hat.

7. Wassererhitzungsvorrichtung (2) nach Anspruch 5 oder 6, wobei die Wasserausgabevorrichtung eine Wassererhitzungsvorrichtung (44) umfasst, die so konfiguriert ist, dass sie das Wasser erhitzt, während das Wasser im Wasserrohr (40) ist.

8. Wassererhitzungsvorrichtung (2) nach einem der vorhergehenden Ansprüche, wobei die Wasserausgabevorrichtung so konfiguriert ist, dass sie das ausgegebene Wasser auf mindestens 90° Celsius erhitzt.

9. Wassererhitzungsvorrichtung (2) nach einem der vorhergehenden Ansprüche, wobei die Vorrichtung einen Netzstromsockel (14), der mit einer Stromquelle verbindbar ist, und einen Hauptkörper (6) umfasst, in dem sich der Wassertank (8) befindet und der mit dem Netzstromsockel (14) verbindbar ist, um im Gebrauch davon Strom zu erhalten.

## Revendications

1. Appareil de chauffage d'eau (2) comprenant une bouilloire et un distributeur d'eau dans lequel l'appareil comprend un premier dispositif de chauffage d'eau (46) pour la bouilloire, l'appareil comprenant en outre un deuxième dispositif de chauffage d'eau (44) pour le distributeur d'eau ;
dans lequel le distributeur d'eau comprend un bec de distribution (18) et la bouilloire comprend un bec verseur (16), le bec verseur (16) étant situé au-dessus du bec de distribution (18) ; et
dans lequel le bec verseur (16) est situé pardessus le bec de distribution (18).

2. Appareil de chauffage d'eau (2) selon la revendication 1, dans lequel l'appareil de chauffage d'eau (2) comprend un réservoir d'eau commun (8) à la fois pour la bouilloire et le distributeur d'eau.

3. Appareil de chauffage d'eau (2) selon la revendication 1 ou la revendication 2, comprenant un corps (6) dans lequel est prévu un dispositif de localisation de réceptacle (26).

4. Appareil de chauffage d'eau (2) selon la revendication 3, dans lequel le dispositif de localisation de réceptacle (26) comprend une section découpée formée qui est concave.

5. Appareil de chauffage d'eau (2) selon l'une quelconque des revendications précédentes, dans lequel le distributeur d'eau comprend une pompe (36) configurée pour pomper de l'eau depuis un réservoir d'eau (8) jusqu'à un bec de distribution (42) ; et le distributeur d'eau comprend un tube (40) à travers lequel l'eau peut être pompée depuis le réservoir d'eau (8) jusqu'au bec de distribution (42).

6. Appareil de chauffage d'eau (2) selon la revendication, 5, dans lequel le tube (40) se termine par le bec de distribution (42) et la partie orientée vers le bas pendant l'utilisation du bec de la pompe a un volume inférieur à 5 cm³.

7. Appareil de chauffage d'eau (2) selon la revendication 5 ou la revendication 6, dans lequel le distributeur d'eau comprend un dispositif de chauffage d'eau (44) configuré de manière à chauffer l'eau pendant que l'eau est dans le tube d'eau (40).

8. Appareil de chauffage d'eau (2) selon l'une quelconque des revendications précédentes, dans lequel le distributeur d'eau est configuré de manière à chauffer l'eau de distribution jusqu'à au moins 90° Celsius.

9. Appareil de chauffage d'eau (2) selon l'une quelconque des revendications précédentes, dans lequel l'appareil comprend une base d'alimentation en puissance (14) pouvant être connectée à une source d'alimentation en puissance et un corps principal (6) dans lequel est placé le réservoir d'eau (8), et le corps principal (6) peut être connecté à la base d'alimentation en puissance (14) de manière à recevoir de la puissance de celle-ci, pendant l'utilisation.
